# EUROPÄISCHE PATENTSCHRIFT

(11) **EP 3 456 448 B1**
(45) Veröffentlichungstag und Bekanntmachung des Hinweises auf die Patenterteilung: **13.05.2020**
(21) Anmeldenummer: 17191263.7
(22) Anmeldetag: 15.09.2017
(51) Int. Cl.: B23B 31/26

(54) **KUPPLUNGSVORRICHTUNG**
COUPLING DEVICE
DISPOSITIF D'ACCOUPLEMENT

(43) Veröffentlichungstag der Anmeldung: 20.03.2019
(73) Patentinhaber: Narr Beteiligungs GmbH, 73257 Köngen (DE)
(72) Erfinder: Brosowsky, Paul, 73326 Deggingen (DE)
(74) Vertreter: Ruckh, Rainer Gerhard

(56) Entgegenhaltungen:
- EP-A1- 3 088 109
- EP-A2- 1 961 507
- EP-B1- 1 837 107
- DE-A1-102013 011 817
- DE-A1-102013 110 043
- US-A- 2 996 301
- US-A- 3 168 322

## Beschreibung

Die Erfindung betrifft eine Kupplungsvorrichtung gemäß dem Oberbegriff des Anspruchs 1.

Eine derartige Kupplungsvorrichtung ist aus der EP 1 837 107 B1 bekannt. Diese Kupplungsvorrichtung dient zum Kuppeln eines Hohlschaftkegels mit einer werkzeugmaschinenseitig vorgesehenen Aufnahme und umfasst eine Spannzange, die einzelne Spannsegmente und an einem Ende am äußeren Umfang einen Ringbund mit einer keilförmigen Ringfläche aufweist. Weiterhin ist eine Zugstange mit einem eine radiale Erhöhung aufweisenden Kopf vorgesehen, der zum Spannen in Richtung der einzelnen Spannsegmente drückt, wobei die Spannsegmente radial nach außen in den Hohlschaft des Hohlschaftkegels ausgelenkt werden.

Die Spannzange weist am anderen, dem Ringbund gegenüberliegenden Ende einen Einhängebund mit radialer Fläche auf, die auf eine feste axiale Abstützung eines Teils der Aufnahme drückt. Die Spannzange ist aus einem Stück gebildet und mit einem endseitigen Ring am hinteren Teil versehen, mit dem die Spannzange innen an der Zugstange und außen an einer äußeren Abstützung schwenkbar abgestützt ist, wobei sich an den Ring ein dünnwandiger Mantelabschnitt der Spannsegmente anschließt, der ein Gelenk bildet. Eine radiale Auslenkung der Spannsegmente erfolgt unter Inanspruchnahme der Gelenke am hinteren Teil der Spannzange.

Die Spannsegmente weisen am hinteren Teil der Spannzange Kammern auf, um den Spannsegmenten eine Tellerfedereigenschaft zu verleihen.

Die Kammern bilden somit Federelemente, die Rückstellkräfte bei der Auslenkung der Spannsegmente generieren.

Ein Vorteil dieser Kupplungsvorrichtung besteht darin, dass die Spannzange einstückig ausgebildet ist, das heißt die Teileanzahl kann somit gering gehalten werden, wodurch der Fertigungsaufwand erheblich reduziert ist.

Weiter vorteilhaft ist, dass die einstückige Spannzange exakt rotationssymmetrisch hergestellt werden kann, wodurch auch bei hohen Drehzahlen eine hohe Wuchtgüte erreicht wird.

Ein Nachteil dieser Kupplungsvorrichtung besteht darin, dass diese eine hohe Verschleißanfälligkeit aufweist. Insbesondere sind die die Tellerfedereigenschaften aufweisenden und damit Federelemente bildenden Kammern am hinteren Teil der Spannzange verschleißanfällig. Diese Kammern sind hohen mechanischen Belastungen, insbesondere Torsionsbelastungen ausgesetzt. Dies führt im Regelfall zu einem frühzeitigen Brechen dieser Federelemente, wodurch die Lebensdauer der Spannzange unerwünscht reduziert ist.

Die US 2,996,301 A betrifft ein Werkstück-Spannsystem mit einer Spannzange, die mittels einer Zugstange zwischen einer Spann- und Lösestellung bewegt wird. Die Spannzange weist einzelne Spannsegmente auf, die durch in axialer Richtung der Spannzange verlaufende Schlitze getrennt sind.

Die US 3,168,322 A betrifft ein Werkzeug-Spannsystem mit einer Spanneinheit, die mittels einer Zugstange befestigt werden kann. Die Spanneinheit weist eine Spannzange auf, die mehrere Spannsegmente aufweist, die durch Schwächungsstrukturen mit Längsschlitzen verbunden sind, sodass zur Durchführung von Spannvorgängen die Spannzange in radialer Richtung zusammengepresst werden kann.

Die EP 1 961 507 A2 betrifft eine Spannvorrichtung für einen Hohlschaft an einem Hohlschaftkegel, Werkzeug oder Werkstück, mit einer eine Spindelaufnahme für den Hohlschaft aufweisenden Arbeitsspindel und mit in der Hohlschaftaufnahme des Hohlschaftes ausgebildeten, geneigt verlaufenden Spannschrägen, an denen durch einen axial verschieblichen, in der Arbeitsspindel geführten Spannkopf betätigbare, an der Arbeitsspindel gelagerte Spannklauen mit korrespondierend geneigten Schrägflächen zur Anlage kommen. Die Außenumfangsfläche des Hohlschaftes besitzt im Querschnitt eine nicht kreisförmige Gestalt und die Spindelaufnahme eine dazu korrespondierende Gestalt.

Die EP 3 088 109 A1 betrifft eine Segmentspannzange mit mindestens zwei Spannsegmenten, die jeweils eine Aufnahme aufweisen, in denen ein die Spannsegmente miteinander verbindender Kopplungsring aufgenommen ist. Zur Verbindung des Kopplungsrings mit den Spannsegmenten sind Sicherungsmittel sowohl zur Begrenzung der axialen Bewegbarkeit als auch zur umfangsseitigen Lagefestlegung der Spannsegmente relativ zum Kopplungsring vorgesehen.

Die DE 10 2013 011 817 A1 betrifft eine flexible Führungsbuchse mit einer hohlzylindrischen Öffnung zur Halterung von zylindrischen Werkstücken, welche Haltezonen mit zylindersegmentförmigen Innenflächen und mindestens drei Kompressionszonen aufweist. Jede der Kompressionszonen weist mindestens einen Schlitz auf, der den Außendurchmesser der Führungsbuchse, nicht jedoch den Innendurchmesser der Führungsbuchse im Bereich der hohlzylindrischen Öffnung durchbricht und darüber hinaus mindestens einen Schlitz, der den Innendurchmesser der Führungsbuchse im Bereich der hohlzylindrischen Öffnung, nicht jedoch den Außendurchmesser der Führungsbuchse durchbricht.

Die DE 10 2013 110 043 A1 betrifft eine Spannvorrichtung für ein Werkzeug, mit einer Werkzeugaufnahme, einer in einer Öffnung in der Werkzeugaufnahme eingesetzten Spannzange zum Spannen des Werkzeugs, einer Spannmutter zur axialen Verschiebung der Spannzange gegenüber der Werkzeugaufnahme und einem zwischen der Spannmutter und der Spannzange angeordneten und gegenüber der Spannmutter drehbar gelagerten Druckstück, über das die Spannzange durch die Spannmutter gegenüber der Werkzeugaufnahme axial verschiebbar ist. Um ein sicheres Spannen und Lösen eines Werkzeugschafts in der Spannzange auch bei sehr hohen Spannkräften zu ermöglichen, weist das Druckstück Koppelelemente zur verdrehgesicherten Verbindung mit korrespondierenden Gegenelemente der Werkzeugaufnahme auf.

Der Erfindung liegt die Aufgabe zugrunde, eine Kupplungsvorrichtung der eingangs genannten Art bereitzustellen, welche bei geringem fertigungstechnischem Aufwand einen robusten verschleißunanfälligen Aufbau aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die erfindungsgemäße Kupplungsvorrichtung dient zum Kuppeln eines Hohlschaftkegels mit einer werkzeugmaschinenseitigen Aufnahme, mit einer Spannzange und mit einer Zugstange, mittels derer die Spannzange in eine Lösestellung oder eine Spannstellung einbringbar ist. Die Spannzange ist einstückig ausgebildet und weist mehrere in deren Längsrichtung verlaufende

Spannsegmente auf. Die Spannsegmente führen bei Überführen der Spannzange in die Spannstellung in radialer Richtung gegen von Federelementen ausgeübte Federkräfte Schwenkbewegungen aus. Die Federelemente sind Bestandteile der Spannzange. Jedes der Federelemente ist zwischen zwei benachbarten Spannsegmenten in deren Längsrichtung verlaufend vorgesehen.

Die Funktionsweise der erfindungsgemäßen Kupplungsvorrichtung ist derart, dass durch Betätigen, das heißt Verschieben der Zugstange, die Spannzange zwischen einer Spannstellung und einer Lösestellung bewegt werden kann. In der Spannstellung fixiert die Spannzange den Hohlschaftkegel in seiner Sollposition an der Aufnahme, so dass mit einem im Hohlschaftkegel gelagerten Werkzeug Bearbeitungsvorgänge durchgeführt werden. In der Lösestellung der Spannzange ist dagegen der Hohlschaftkegel freigegeben und kann gegebenenfalls ausgetauscht werden.

Der Grundgedanke der Erfindung besteht darin, die Federelemente als integrale Bestandteile der Spannzange in Längsrichtung der Spannsegmente verlaufend anzuordnen. Die so ausgebildeten Federelemente können damit eine große Längsausdehnung aufweisen, wobei sich diese Federelemente über nahezu die gesamte Länge oder besonders vorteilhaft über die gesamte Länge der Spannsegmente erstrecken. Dadurch wird erreicht, dass bei einer radialen Auslenkung der Spannsegmente, insbesondere bei Überführen der Spannzange in ihre Spannstellung, die Federelemente nur sehr kleine Auslenkbewegungen ausführen. Dies wiederum bewirkt, dass die Federelemente während des Betriebs der Kupplungsvorrichtung nur geringen mechanischen Belastungen ausgesetzt sind, so dass auch bei langen Betriebszeiten kein nennenswerter Verschleiß der Federelemente auftritt. Die Spannzange weist demzufolge eine hohe Lebensdauer auf, wodurch insgesamt ein robuster Aufbau der Kupplungsvorrichtung realisiert wird.

Ein weiterer wesentlicher Vorteil besteht darin, dass durch die Einstückigkeit der Spannzange die Anzahl der Einzelteile der Kupplungsvorrichtung gering gehalten werden kann, was den Fertigungsaufwand dadurch minimiert, dass die Federelemente mit den Spannsegmenten in einem Fertigungsschnitt hergestellt werden können.

Weiter vorteilhaft sind die identisch ausgebildeten Spannsegmente. Ebenso sind die Federelemente identisch ausgebildet. Dabei bilden die Spannsegmente und die Federelemente eine bezüglich der Längsachse der Spannzange rotationssymmetrische Anordnung.

Durch die so erhaltene komplette Rotationssymmetrie der Spannzange weist diese, anders als eine auf einzelnen Spannsegmenten basierende Spannzange, auch bei hohen Drehzahlen eine hohe Wuchtgüte auf. Damit ist die Kupplungsvorrichtung im Bereich des HSC (high speed cutting), das heißt der Hochgeschwindigkeitsbearbeitung einsetzbar. Zudem ist die Spannzange auch für hohe Spannkräfte auslegbar.

Weiter vorteilhaft ist die einfache Kontur der Spannzange, was sich fertigungstechnisch positiv auswirkt. Dabei ist die Form der Spannzange so gewählt, dass diese die Anforderungen der DIN 69063-S erfüllt.

Gemäß einer vorteilhaften Ausgestaltung der Erfindung bildet jedes Spannsegment an seinem hinteren Ende ein Gelenk aus. Diese Gelenke sind in einer Ausnehmung in der werkzeugmaschinenseitigen Aufnahme gelagert.

Weiterhin weist jedes Spannsegment an seinem vorderen Ende ein Bundsegment auf. Das Bundsegment weist eine Schrägfläche auf, an welcher ein Kopf der Zugstange anliegt. Das Bundsegment weist weiter eine Anlagefläche auf, an welcher ein Segment des Hohlschaftkegels anliegt.

Dabei erstreckt sich ein Federelement vom Gelenk bis zum Bundsegment eines Spannsegments.

Bei Betätigen der Zugstange führen die Spannsegmente somit Schwenkbewegungen bezüglich der durch die Gelenke verlaufenden Schwenkachsen aus.

Bei Überführen der Spannzange in die Spannstellung werden die Anlageflächen der Bundsegmente der Spannsegmente in Eingriff mit dem Hohlschaftkegel gebracht, so dass dieser an der Aufnahme fixiert ist.

Bei Überführen der Spannzange in die Lösestellung werden die Anlageflächen der Bundsegmente außer Eingriff mit dem Hohlschaftkegel gebracht, wobei die Rückstellkräfte der Federelemente die Spannsegmente in ihre Ausgangsstellungen bewegen.

Da die Federelemente von den Gelenken am hinteren Ende der Spannzange bis zu den Bundsegmenten an dem vorderen Ende verlaufen und sich so wenigstens nahezu über die gesamte Länge der Spannsegmente erstrecken, brauchen die Federelemente nur geringe Auslenkbewegungen auszuführen. Weiterhin wird eine gleichmäßige Kraftverteilung über die Federelemente erhalten. Dadurch wird ein geringer Verschleiß der Federelemente erreicht und eine dementsprechend hohe Lebensdauer der Spannzange.

Besonders vorteilhaft bilden die Federelemente Blattfederelemente aus, so dass diese keinen Torsionsbelastungen ausgesetzt sind.

Gemäß einer konstruktiv besonders vorteilhaften Ausführungsform weist jedes Federelement zwei in Abstand zueinander verlaufende Arme auf. Diese sind an einem längsseitigen Ende des Federelements über einen Verbindungssteg miteinander verbunden.

Das so gebildete Federelement ist in Form einer spiegelsymmetrischen Gabel ausgebildet. Die Arme der Federelemente verlaufen im Wesentlichen parallel im Abstand zueinander, wobei beide Arme jeweils im Zwischenraum zwischen zwei benachbarten Spannsegmenten angeordnet sind. Dabei ist jeder Arm an seinem ursprünglich freien Ende an dem zugeordneten Spannsegment angeformt.

Jeder Arm ist nur über diese Anformung an seinem freien Ende mit dem zugeordneten Spannsegment verbunden. Der Rest des Armes verläuft im Abstand zum Spannsegment und ist damit beweglich gelagert, so dass sich die Arme über nahezu ihre gesamte Länge elastisch verformen können. Damit werden bei einer Krafteinwirkung die Kräfte über die gesamte Länge des Federelements verteilt. Aufgrund der großen Länge des Federelements erfolgen bei einer Krafteinwirkung nur kleine Auslenkungen der Arme, so dass das Federelement verschleißunanfällig ist.

Die Erfindung wird im Folgenden anhand der Zeichnungen erläutert. Es zeigen:
- Figur 1:: Ausführungsbeispiel der erfindungsgemäßen Kupplungsvorrichtung mit einer Spannzange in ihrer Spannstellung.
- Figur 2:: Anordnung gemäß Figur 1 mit der Spannzange in ihrer Lösestellung.
- Figur 3:: Erste perspektivische Darstellung der Spannzange der Kupplungsvorrichtung gemäß den Figuren 1 und 2.
- Figur 4:: Zweite perspektivische Darstellung der Spannzange der Kupplungsvorrichtung gemäß den Figuren 1 und 2.
- Figur 5:: Querschnittdarstellung der Spannzange gemäß den Figuren 3 und 4.
- Figur 6:: Erste Längsschnittdarstellung der Spannzange gemäß den Figuren 3 und 4.
- Figur 7:: Zweite Längsschnittdarstellung der Spannzange gemäß den Figuren 3 und 4.

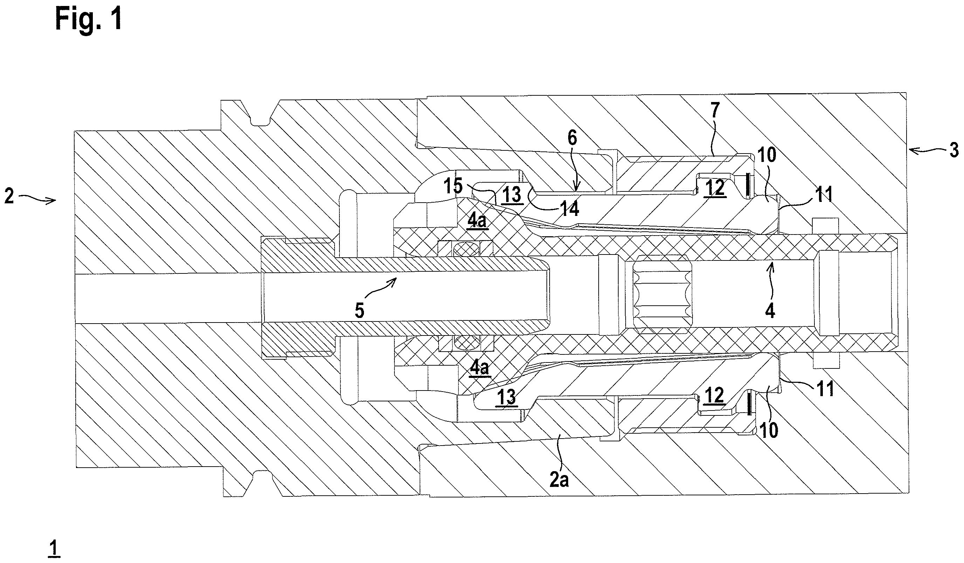

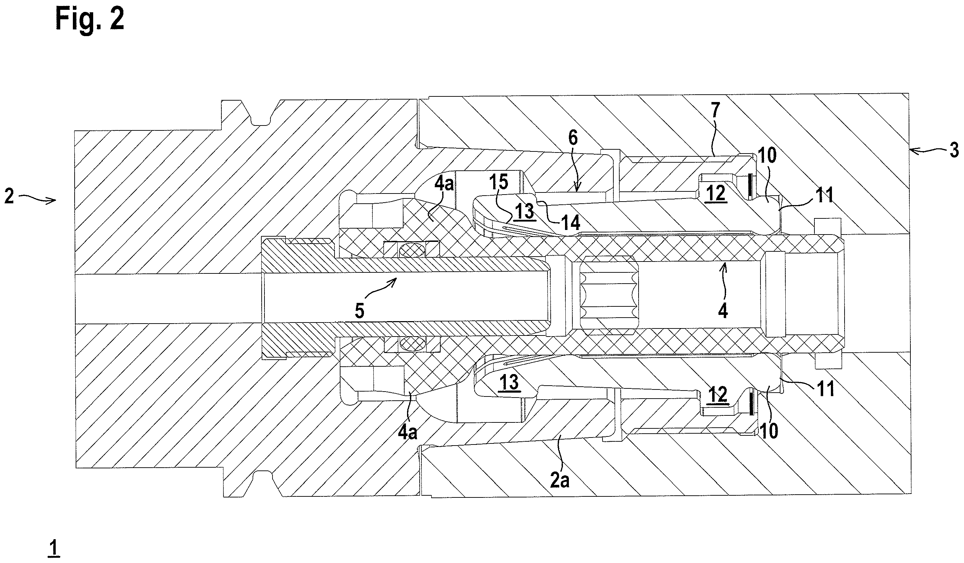

Die Figuren 1 und 2 zeigen ein Ausführungsbeispiel der erfindungsgemäßen Kupplungsvorrichtung 1. Die Kupplungsvorrichtung 1 dient zum Kuppeln eines Hohlschaftkegels 2 an einer Aufnahme 3 einer Werkzeugmaschine. Im Hohlschaftkegel 2 kann ein nicht dargestelltes Werkzeug gelagert werden.

Die Aufnahme 3 ist in axialer Richtung von einer Bohrung durchsetzt, in welcher eine Zugstange 4 in deren Längsrichtung verschiebbar gelagert ist. Die Zugstange 4 weist an ihrem Vorderende einen Kopf 4a auf.

Die Zugstange 4 ist in Form eines Hohlkörpers ausgebildet, wobei in den Hohlkörper eine Führung 5 des Hohlschaftkegels 2 ragt. Die Zugstange 4 kann so auf der Führung 5 gleiten und ist dadurch zwangsgeführt.

Die Kupplungsvorrichtung 1 weist weiterhin eine Spannzange 6 auf, wobei ein Teil der Spannzange 6 in einer in der Aufnahme 3 angeordneten Hülse 7 gelagert ist. Durch Verschieben der Zugstange 4 kann die Spannzange 6 zwischen einer Spannstellung und einer Lösestellung bewegt werden.

Figur 1 zeigt die Spannzange 6 in ihrer Spannstellung. In dieser Spannstellung ist die Spannzange 6 im Eingriff mit dem kegelförmigen Vorderteil 2a des Hohlschaftkegels 2, so dass der Hohlschaftkegel 2 in seiner Sollposition an der Aufnahme 3 lagefixiert ist. Damit können mit einem im Hohlschaftkegel 2 gelagerten Werkzeug Bearbeitungsvorgänge durchgeführt werden.

Figur 2 zeigt die Spannzange 6 in ihrer Lösestellung. In dieser Lösestellung ist die Spannzange 6 nicht mehr in Eingriff mit dem kegelförmigen Vorderteil 2a des Hohlschaftkegels 2, so dass nun der Hohlschaftkegel 2 von der Aufnahme 3 abgenommen werden kann.

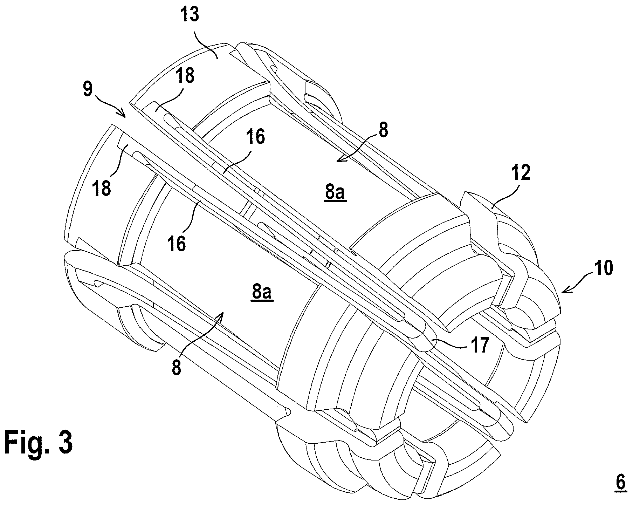

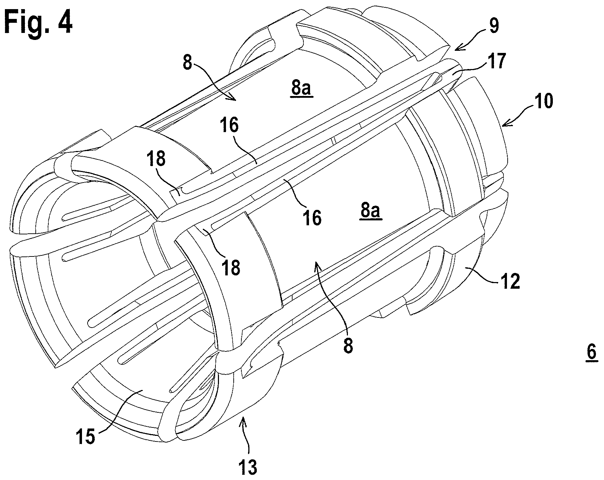

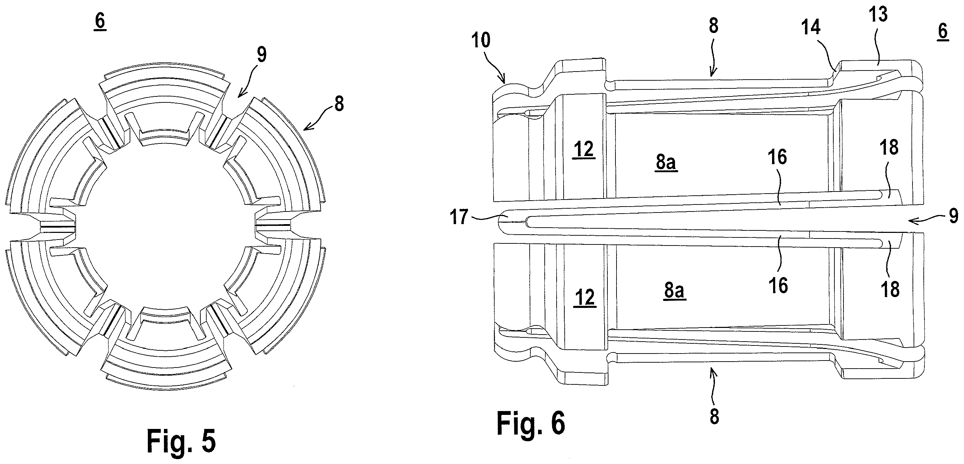

Die Figuren 3 bis 6 zeigen die Spannzange 6 der Kupplungsvorrichtung 1 jeweils in einer Einzeldarstellung. Wie aus diesen Abbildungen ersichtlich, ist die Spannzange 6 rotationssymmetrisch bezüglich ihrer Längsachse ausgebildet. Die Spannzange 6 weist im vorliegenden Fall sechs identisch ausgebildete Spannsegmente 8 auf, die nur über Federelemente 9, die ebenfalls identisch ausgebildet sind, verbunden sind. Die Spannzange 6 kann generell auch eine andere Anzahl von Spannsegmenten 8 und Federelementen 9 aufweisen. Die so gebildete Spannzange 6 ist einstückig ausgebildet und besteht vorteilhaft aus einem metallischen Formteil.

Die Längsachsen der Spannsegmente 8 verlaufen parallel zueinander und parallel zur Längsachse der Spannzange 6.

Jedes Spannsegment 8 weist ein zentrales Segment 8a auf, das einen im Wesentlichen konstanten Querschnitt aufweist. Die Außenflächen dieser Zwischenstücke der Spannsegmente 8 liegen auf einer kreiszylindrischen Mantelfläche der Spannzange 6.

Am hinteren Ende jedes Spannsegments 8 ist ein Gelenk 10 ausgebildet. Dieses Gelenk 10 ist in Form einer Querschnittsverbreiterung des Spannsegments 8 gebildet. Das Gelenk 10 weist eine abgerundete Kontur auf. Jedes Gelenk 10 ist in einer Ausnehmung 11 in der Aufnahme 3 gelagert. Damit ist jedes Spannsegment 8 in der Aufnahme 3 schwenkbar gelagert, wobei die Schwenkachse durch das Gelenk 10 verläuft.

In geringem Abstand zum Gelenk 10 schließt ein Ringsegment 12 an, das von der Außenseite des zentralen Segments 8a eines Spannsegments 8 hervorsteht. Die Ringsegmente 12 aller Spannsegmente 8 ergänzen sich zu einer Ringstruktur, die, wie die Figuren 1 und 2 zeigen, an einem Absatz der Hülse 7 anliegt, wenn das Gelenk 10 in die Ausnehmung 11 der Aufnahme 3 eingesetzt ist.

Am vorderen Ende jedes Spannsegments 8 ist ein Bundsegment 13 vorgesehen, das über die Außenseite des zentralen Segments hervorsteht. Dabei ist an der Grenze von dem Bundsegment 13 zum zentralen Segment eine Anlagefläche 14 in Form eines Absatzes ausgebildet.

Die Innenseite des Bundsegments 13 ist in Form einer Schrägfläche 15 ausgebildet. Diese Schrägfläche 15 ist an die Kontur des Kopfs 4a der Zugstange 4 angepasst.

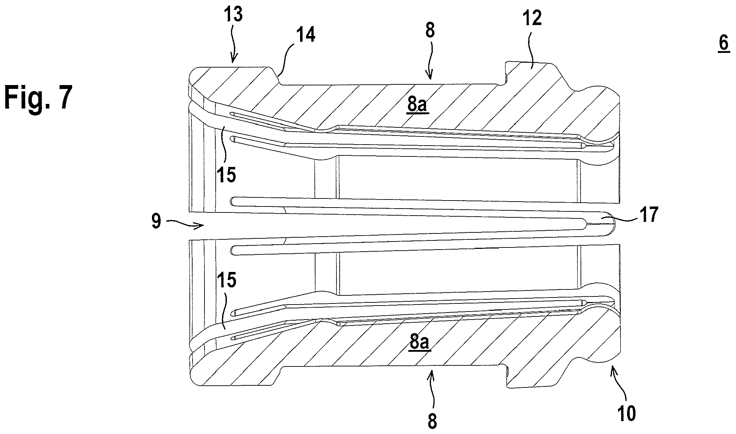

Wie die Figuren 3 bis 7 zeigen, verläuft jedes Federelement 9 im Zwischenraum zwischen zwei benachbarten Spannsegmenten 8. Das Federelement 9 verläuft in Längsrichtung der Spannsegmente 8 und erstreckt sich dabei vom Bundsegment 13 bis zum Gelenk 10 eines Spannsegments 8, wobei sich im vorliegenden Fall das Federelement 9 über die gesamte Länge des Spannsegments 8 erstreckt. Generell kann sich das Federelement 9 auch nur über einen Teil eines Spannsegments 8 erstrecken.

Jedes Federelement 9 ist in vorliegendem Fall als Blattfederelement ausgebildet. Das so ausgebildete Federelement 9 weist zwei in Abstand im Wesentlichen parallel zueinander verlaufende Arme 16 auf, die an einem ihrer längsseitigen Enden über einen Verbindungssteg 17 verbunden sind. Die Arme 16 sind spiegelsymmetrisch zu einer Spiegelebene ausgebildet. Jeder Arm 16 ist an seinem freien Ende an das zugeordnete Spannsegment 8 angeformt, wobei hierzu ein Wulst 18 am freien Ende des Arms 16 hervorsteht, der die Verbindung zum Spannsegment 8 ausbildet. Damit verläuft jeder Arm 16 ausgehend von dieser Verbindungsstelle in geringem Abstand zum zugeordneten Spannsegment 8.

Die Funktionsweise der so ausgebildeten Spannzange 6 in der Kupplungsvorrichtung 1 ist derart, dass dann, wenn mit der Zugstange 4 die Spannzange 6 in ihre Spannstellung überführt wird, indem der Kopf 4a der Zugstange 4 in den Hohlraum der Spannzange 6 eingeführt wird, von diesem Kopf 4a radial wirkende Kraft auf die Schrägflächen 15 der Spannsegmente 8 ausgeübt wird, so dass diese radial nach außen gedrückt werden. Dadurch führen die Spannsegmente 8 Schwenkbewegungen bezüglich der durch die Gelenke 10 verlaufenden Schwenkachse aus. Die Federelemente 9 werden dabei aufgespreizt und üben dadurch dieser Bewegung entgegengerichtete Rückstellkräfte aus.

Wenn, wie Figur 1 zeigt, die Spannstellung der Spannzange 6 erreicht ist, liegen die Anlageflächen 14 der Spannsegmente 8 an einem Absatz des kegelförmigen Vorderteils 2a des Hohlschaftkegels 2 an, wodurch dieser an der Aufnahme 3 lagefixiert ist.

Wird danach zum Lösen des Hohlschaftkegels 2 die Zugstange 4 wieder zurückgefahren, kehren die Spannsegmente 8 durch die Rückstellkräfte der Federelemente 9 in ihre Ausgangspositionen zurück. Die Spannzange 6 befindet sich dann in der in Figur 2 dargestellten Lösestellung, in der sie den Hohlschaftkegel 2 freigibt.

### Bezugszeichenliste

- (1): Kupplungsvorrichtung
- (2): Hohlschaftkegel
- (2a): Vorderteil
- (3): Aufnahme
- (4): Zugstange
- (4a): Kopf
- (5): Führung
- (6): Spannzange
- (7): Hülse
- (8): Spannsegment
- (8a): Segment
- (9): Federelement
- (10): Gelenk
- (11): Ausnehmung
- (12): Ringsegment
- (13): Bundsegment
- (14): Anlagefläche
- (15): Schrägfläche
- (16): Arm
- (17): Verbindungssteg
- (18): Wulst

## Patentansprüche

1. Kupplungsvorrichtung (1) zum Kuppeln eines Hohlschaftkegels (2) mit einer werkzeugmaschinenseitig vorgesehenen Aufnahme (3), mit einer Spannzange (6) und mit einer Zugstange (4), mittels derer die Spannzange (6) in eine Lösestellung oder eine Spannstellung einbringbar ist, wobei die Spannzange (6) einstückig ausgebildet ist und mehrere in deren Längsrichtung verlaufende Spannsegmente (8) aufweist, **dadurch gekennzeichnet, dass**, die Spannsegmente (8) dazu eingerichtet sind, bei Überführen der Spannzange (6) in die Spannstellung, in radialer Richtung gegen von Federelementen (9) ausgeübte Federkräfte Schwenkbewegungen auszuführen, wobei die Federelemente (9) Bestandteile der Spannzange (6) sind, wobei jedes der Federelemente (9) zwischen zwei benachbarten Spannsegmenten (8) in deren Längsrichtung verlaufend vorgesehen ist.

2. Kupplungsvorrichtung (1) nach Anspruch 1, **dadurch gekennzeichnet, dass** die Spannsegmente (8) identisch ausgebildet sind.

3. Kupplungsvorrichtung (1) nach einem der Ansprüche 1 oder 2, **dadurch gekennzeichnet, dass** die Federelemente (9) identisch ausgebildet sind.

4. Kupplungsvorrichtung (1) nach einem der Ansprüche 1 bis 3, **dadurch gekennzeichnet, dass** die Spannsegmente (8) und die Federelemente (9) eine bezüglich der Längsachse der Spannzange (6) rotationssymmetrische Anordnung bilden.

5. Kupplungsvorrichtung (1) nach einem der Ansprüche 1 bis 4, **dadurch gekennzeichnet, dass** jedes Spannsegment (8) an seinem hinteren Ende ein Gelenk (10) ausbildet.

6. Kupplungsvorrichtung (1) nach einem der Ansprüche 1 bis 5, **dadurch gekennzeichnet, dass** jedes Spannsegment (8) an seinem vorderen Ende ein Bundsegment (13) aufweist, wobei das Bundsegment (13) eine Schrägfläche (15) aufweist, an welcher ein Kopf (4a) der Zugstange (4) anliegt, und wobei das Bundsegment (13) eine Anlagefläche (14) aufweist, an welcher ein Segment des Hohlschaftkegels (2) anliegt.

7. Kupplungsvorrichtung (1) nach Anspruch 5 und 6, **dadurch gekennzeichnet, dass** sich ein Federelement (9) vom Gelenk (10) bis zum Bundsegment (13) eines Spannsegments (8) erstreckt.

8. Kupplungsvorrichtung (1) nach einem der Ansprüche 1 bis 7, **dadurch gekennzeichnet, dass** sich die Federelemente (9) über die gesamte Länge der Spannsegmente (8) erstrecken.

9. Kupplungsvorrichtung (1) nach einem der Ansprüche 1 bis 8, **dadurch gekennzeichnet, dass** die Federelemente (9) Blattfederelemente ausbilden.

10. Kupplungsvorrichtung (1) nach einem der Ansprüche 1 bis 9, **dadurch gekennzeichnet, dass** jedes Federelement (9) zwei in Abstand zueinander verlaufende Arme (16) aufweist, die an einem längsseitigen Ende des Federelements (9) über einen Verbindungssteg (17) miteinander verbunden sind.

11. Kupplungsvorrichtung (1) nach Anspruch 10, **dadurch gekennzeichnet, dass** jeweils ein Arm (16) an einem Rand eines Spannsegments (8) zweier benachbarter Spannsegmente (8) angeordnet ist.

12. Kupplungsvorrichtung (1) nach Anspruch 11, **dadurch gekennzeichnet, dass** jeder Arm (16) an seinem freien Ende mit dem zugeordneten Spannsegment (8) angeformt ist.

13. Kupplungsvorrichtung (1) nach einem der Ansprüche 10 bis 12, **dadurch gekennzeichnet, dass** jedes Federelement (9) mit den beiden Armen (16) eine spiegelsymmetrische Anordnung ausbildet.

## Claims

1. The coupling device (1) for coupling a hollow shank taper (2) to a receptacle (3) provided on the machine tool side, with a collet (6) and with a pull rod (4), by means of which the collet (6) can be brought into a release position or a clamping position, the collet (6) being of one-piece design and having a plurality of clamping segments (8) running in its longitudinal direction, **characterized in that** the clamping segments (8) are arranged in the longitudinal direction of the collet (6), **in that**, when the collet (6) is transferred into the clamping position, the clamping segments (8) are set up to perform pivoting movements in the radial direction against spring forces exerted by spring elements (9), the spring elements (9) being components of the collet (6), each of the spring elements (9) being provided between two adjacent clamping segments (8) running in the longitudinal direction thereof.

2. The coupling device (1) according to claim 1, **characterised in that** the clamping segments (8) are identically designed.

3. The coupling device (1) according to one of claims 1 or 2, **characterised in that** the spring elements (9) are identically formed.

4. The coupling device (1) according to one of claims 1 to 3, **characterised in that** the clamping segments (8) and the spring elements (9) form an arrangement which is rotationally symmetrical with respect to the longitudinal axis of the collet (6).

5. The coupling device (1) according to one of claims 1 to 4, **characterised in that** each clamping segment (8) forms a joint (10) at its rear end.

6. The coupling device (1) according to one of claims 1 to 5, **characterised in that** each clamping segment (8) has a collar segment (13) at its front end, wherein the collar segment (13) has an inclined surface (15) against which a head (4a) of the drawbar (4) rests, and wherein the collar segment (13) has a contact surface (14) against which a segment of the hollow shaft cone (2) rests.

7. The coupling device (1) according to claims 5 and 6, **characterised in that** a spring element (9) extends from the joint (10) to the collar segment (13) of a clamping segment (8).

8. The coupling device (1) according to any one of claims 1 to 7, **characterized in that** the spring elements (9) extend over the entire length of the clamping segments (8).

9. The coupling device (1) according to one of the claims 1 to 8, **characterised in that** the spring elements (9) form leaf spring elements.

10. The coupling device (1) according to one of the claims 1 to 9, **characterised in that** each spring element (9) has two arms (16) which extend at a distance from one another and are connected to one another at a longitudinal end of the spring element (9) via a connecting web (17).

11. The coupling device (1) according to claim 10, **characterised in that** one arm (16) is arranged at an edge of a clamping segment (8) of two adjacent clamping segments (8).

12. The coupling device (1) according to claim 11, **characterised in that** each arm (16) is formed at its free end with the associated clamping segment (8).

13. The coupling device (1) according to one of claims 10 to 12, **characterised in that** each spring element (9) forms a mirror-symmetrical arrangement with the two arms (16).

## Revendications

1. Dispositif d'accouplement (1) pour accoupler un cône à tige creuse (2) à un logement (3) prévu du côté de la machine-outil, avec une pince de serrage (6) et avec une tige de traction (4), au moyen de laquelle la pince de serrage (6) peut être amenée dans une position de desserrage ou une position de serrage, la pince de serrage (6) étant réalisée d'un seul tenant et présentant plusieurs segments de serrage (8) s'étendant dans sa direction longitudinale, **caractérisé en ce que** les segments de serrage (8) sont disposés dans la direction longitudinale de la pince de serrage (6), **en ce que**, lors du transfert de la pince de serrage (6) dans la position de serrage, les segments de serrage (8) sont agencés pour effectuer des mouvements de pivotement dans la direction radiale contre les forces de ressort exercées par des éléments de ressort (9), les éléments de ressort (9) étant des composants de la pince de serrage (6), chacun des éléments de ressort (9) étant prévu entre deux segments de serrage (8) adjacents s'étendant dans la direction longitudinale de ceux-ci.

2. Dispositif d'accouplement (1) selon la revendication 1, **caractérisé en ce que** les segments de serrage (8) sont de conception identique.

3. Dispositif d'accouplement (1) selon l'une des revendications 1 ou 2, **caractérisé en ce que** les éléments de ressort (9) sont de forme identique.

4. Dispositif d'accouplement (1) selon l'une des revendications 1 à 3, **caractérisé en ce que** les segments de serrage (8) et les éléments de ressort (9) forment un agencement qui est symétrique en rotation par rapport à l'axe longitudinal de la pince de serrage (6).

5. Dispositif d'accouplement (1) selon l'une des revendications 1 à 4, **caractérisé en ce que** chaque segment de serrage (8) forme une articulation (10) à son extrémité arrière.

6. Dispositif d'accouplement (1) selon l'une des revendications 1 à 5, **caractérisé en ce que** chaque segment de serrage (8) présente à son extrémité avant un segment de collier (13), le segment de collier (13) présentant une surface inclinée (15) contre laquelle repose une tête (4a) du timon (4), et le segment de collier (13) présentant une surface de contact (14) contre laquelle repose un segment du cône à arbre creux (2).

7. Dispositif d'accouplement (1) selon les revendications 5 et 6, **caractérisé en ce qu'**un élément de ressort (9) s'étend de l'articulation (10) au segment de collier (13) d'un segment de serrage (8).

8. Dispositif d'accouplement (1) selon l'une des revendications 1 à 7, **caractérisé en ce que** les éléments de ressort (9) s'étendent sur toute la longueur des segments de serrage (8).

9. Dispositif d'accouplement (1) selon l'une des revendications 1 à 8, **caractérisé en ce que** les éléments de ressort (9) forment des éléments de ressort à lames.

10. Dispositif d'accouplement (1) selon l'une des revendications 1 à 9, **caractérisé en ce que** chaque élément de ressort (9) présente deux bras (16) qui s'étendent à distance l'un de l'autre et qui sont reliés entre eux à une extrémité longitudinale de l'élément de ressort (9) par une barrette de liaison (17).

11. Dispositif d'accouplement (1) selon la revendication 10, **caractérisé en ce qu'**un bras (16) est disposé sur un bord d'un segment de serrage (8) de deux segments de serrage (8) adjacents.

12. Dispositif d'accouplement (1) selon la revendication 11, **caractérisé en ce que** chaque bras (16) est formé à son extrémité libre avec le segment de serrage (8) associé.

13. Dispositif d'accouplement (1) selon l'une des revendications 10 à 12, **caractérisé en ce que** chaque élément de ressort (9) forme un agencement symétrique avec les deux bras (16).
